# EUROPÄISCHE PATENTSCHRIFT

(11) **EP 2 199 044 B1**
(45) Veröffentlichungstag und Bekanntmachung des Hinweises auf die Patenterteilung: **20.04.2011**
(21) Anmeldenummer: 08172539.2
(22) Anmeldetag: 22.12.2008
(51) Int. Cl.: B27C 3/04, B23B 39/16, B27C 9/04

(54) **Bearbeitungsvorrichtung**
Machining apparatus
Appareil d'usinage

(43) Veröffentlichungstag der Anmeldung: 23.06.2010
(73) Patentinhaber: Weeke Bohrsysteme GmbH, 33442 Herzebrock-Clarholz (DE)
(72) Erfinder: Voss, Hugo, 33449 Langenberg (DE)
(74) Vertreter: HOFFMANN EITLE

(56) Entgegenhaltungen:
- DE-A1- 1 806 667
- DE-A1- 3 305 631
- DE-A1- 3 914 008
- DE-A1- 10 259 285
- DE-A1- 19 756 337
- DE-U1- 9 416 699
- GB-A- 191 216 908
- US-A- 1 861 099

## Beschreibung

### Technisches Gebiet

Die vorliegende Erfindung bezieht sich auf eine Bearbeitungsvorrichtung für die Bearbeitung von plattenförmigen Werkstücken, umfassend mindestens eine Bearbeitungseinheit und eine Antriebseinheit zur Übertragung einer mechanischen Leistung auf die Bearbeitungseinheit.

### Stand der Technik

Aus der DE 102 59 285 ist eine gattungsgemäße Bearbeitungsvorrichtung in Form eines Spindelaggregats bekannt, welches aus Modulen aufgebaut ist. Durch diesen modulartigen Aufbau sind unterschiedliche Spindelbohranordnungen der Spindelaggregate realisierbar. Die Spindelaggregate können dabei, in Abhängigkeit des gewünschten Bohrbildes in der gewählten Bohrarordnung, einzeln bzw. individuell aus einer Ruhestellung in eine Arbeitsstellung verfahren werden.

Sämtliche Spindelaggregate stehen im mechanischen Eingriff und werden über eine gemeinsame Antriebseinheit angetrieben. Obgleich sich diese Konstruktion in der Praxis bewährt hat, werden stetig wachsende Anforderungen an Bearbeitungsvorrichtungen der hier zur Rede stehenden Art gestellt. Insbesondere besteht ein hoher Bedarf nach einer Verminderung des Energieverbrauchs und des Geräuschniveaus sowie einer Verlängerung der Lebensdauer der Bearbeitungsvorrichtungen.

Ferner hat sich gezeigt, dass bekannte Bohrspindelaggregate nach dem Abschalten lange nachlaufen, was zu einem unnötigen Sicherheitsrisiko für umstehende Personen führt.

Die DE 94 16 699 U1 offenbart eine Maschine zum Bearbeiten von Holzwerkstoffen gemäß dem Oberbegriff des Anspruchs 1, bei der einzelne Bearbeitungsaggregate auswählbar sind und wahlweise jeweils ein Bearbeitungsaggregat zugeschaltet werden kann.

Die DE 197 56 337 offenbart einen Bohrkopf mit unabhängigen Spindeln, welche selektiv zu- und abgeschaltet werden können.

### Darstellung der Erfindung

Der Erfindung liegt die Aufgabe zugrunde, eine Bearbeitungsvorrichtung für die Bearbeitung von plattenförmigen Werkstücken zu schaffen, die einen energieeffizienten und geräuschreduzierten Betrieb sowie eine erhöhte Lebensdauer der Bearbeitungseinheiten ermöglicht.

Die Lösung der Aufgabe erfolgt durch den Gegenstand des Patentanspruchs 1. Bevorzugte Ausgestaltungen der erfindungsgemäßen Bearbeitungsvorrichtung ergeben sich aus den Unteransprüchen.

Der Erfindung liegt der Gedanke zugrunde, den Betrieb der einzelnen Einheiten der Bearbeitungsvorrichtung gezielt auf die jeweiligen Bearbeitungsanforderungen abzustimmen. Demzufolge weist die Bearbeitungsvorrichtung für die Bearbeitung von plattenförmigen Werkstücken mindestens eine Bearbeitungseinheit, eine Antriebseinheit zur Übertragung einer mechanischen Leistung auf die Bearbeitungseinheit, sowie mindestens ein Trennelement zur Unterbrechung des Leistungsflusses zwischen der Antriebseinheit und mindestens einer Bearbeitungseinheit auf. Durch das Vorsehen des Trennelements zur Unterbrechung des Leistungsflusses, als eine formschlüssige Kupplung mit Synchronring, ist es besonders vorteilhaft möglich, einzelne Bearbeitungseinheiten dann abzuschalten, wenn sie für die Bearbeitung des Werkstückes nicht benötigt werden. Dadurch wird sowohl die Verlustleistung als auch der Verschleiß an den Dichtungen, Zahnrädern und Wälzlagern erheblich gesenkt und es ergibt sich ein hohes Energieeinsparpotential beim Betrieb dieser Bearbeitungsvorrichtung. Ferner verringern sich die Wartungsintervalle der Bearbeitungsvorrichtung, da nicht ständig alle Bearbeitungseinheiten angetrieben werden. Darüber hinaus ergibt sich auch ein vermindertes Geräuschniveau. Nicht zuletzt trägt die erfindungsgemäße Ausgestaltung der Bearbeitungsvorrichtung auch dazu bei, die Betriebssicherheit zu erhöhen, da die Bearbeitungsvorrichtung meist nur kurz nachläuft.

Gemäß der Erfindung ist jedoch vorgesehen, das Trennelement als formschlüssige Kupplung auszuführen. Dadurch ist es besonders vorteilhaft möglich, sowohl bei stehender als auch bei sich drehender Antriebseinheit ein- und auszukuppeln, wodurch der Betrieb der Bearbeitungsvorrichtung nicht zum Zu- und Abschalten einzelner Bearbeitungseinheiten bzw. zum Zu- und Abschalten einzelner Zusatzbearbeitungsaggregate unterbrochen werden muss und die Bearbeitungseinheiten der Bearbeitungsvorrichtung trotz Energieeinsparung ständig verfügbar sind.

Dazu ist ein Synchronring ausgebildet, welcher beim Einkuppeln so lange kein vollständiges Einkuppeln ermöglicht, bis beide Kupplungshälften annähernd gleiche Drehzahlen aufweisen.

In einer bevorzugten Ausführungsform weist die Bearbeitungsvorrichtung mindestens ein mit der Bearbeitungseinheit verbindbares Zusatzaggregat auf, welches über ein Trennelement zur Unterbrechung des Leistungsflusses verfügt. Dabei ist es unwesentlich, ob die Leistung direkt von der Antriebseinheit auf das Zusatzbearbeitungsaggregat übertragen wird, oder ob die Leistung über die Bearbeitungseinheit auf das Zusatzbearbeitungsaggregat übertragen wird. Es ist in jedem Fall ein Trennelement zur Unterbrechung des Leistungsflusses, insbesondere eine Kupplung, zu dem Zusatzbearbeitungsaggregat vorgesehen. Zusatzbearbeitungsaggregate können beispielsweise Bohrspindeln in vertikaler und horizontaler Ausrichtung, Sägen sowie Nutsägen oder dergleichen sein. Durch Zu- und Abschalten dieser Aggregate ist es besonders vorteilhaft möglich, die Verlustleistung und den Verschleiß an diesen Aggregaten gering zu halten. Ferner ist es möglich, den Geräuschpegel, insbesondere durch Nutsägenaggregate, zu senken. Ferner ist es besonders vorteilhaft möglich, das Gefahrenpotenzial durch diese mitlaufenden Zusatzbearbeitungsaggregate, insbesondere die freischneidenden Schnittwerkzeuge, zu verringern.

Gemäß einer weiteren besonders bevorzugten Ausgestaltung der Erfindung ist es möglich, Bearbeitungseinheiten zu Bearbeitungsaggregaten zusammenzufassen, wobei diese Bearbeitungsaggregate unterschiedlich anordbar sind. Durch eine unterschiedliche Anordnung der Bearbeitungsaggregate ist es möglich, anforderungsgemäß die Bearbeitungsvorrichtungen entsprechend anzuordnen. So kann eine Vielzahl unterschiedlicher Bohranordnungen mit relativ geringem Aufwand angeordnet werden.

Gemäß einer weiteren bevorzugten Ausführungsform sind die Bearbeitungseinheiten der Bearbeitungsvorrichtung als Spindelaggregate, insbesondere als Bohrspindelaggregate ausgebildet. Diese Bohrspindelaggregate verfügen über eine Ruhestellung und eine Arbeitsstellung und können so bedarfsgerecht ein- und ausgefahren sowie durch die Kupplung zu- und abgeschaltet werden.

Es ist ferner möglich, das Zusatzbearbeitungsaggregat schnell lösbar von dem Bearbeitungsaggregat auszuführen und das Zusatzbearbeitungsaggregat so auszuführen, dass es über mehrere Verbindungsstellen verfügt, über welche es mit dem Bearbeitungsaggregat verbindbar ist. Auf diese Weise ist es möglich das Zusatzbearbeitungsaggregat je nach Bearbeitungswunsch zu positionieren. So ist es beispielsweise möglich eine Säge, insbesondere eine Nutsäge an unterschiedlichen Stellen des Bearbeitungsaggregats anzuordnen, ohne dafür eine große Standzeit der Bearbeitungsvorrichtung für den Werkzeugwechsel einzuplanen und so Nuten an unterschiedlichen Stellen zu sägen.

Gemäß einer weiteren bevorzugten Ausführungsform ist das Zusatzbearbeitungsaggregat als Frässpindel ausgebildet.

Die erfindungsgemäße Bearbeitungsvorrichtung eignet sich besonders vorteilhaft zur Verwendung in einem Bearbeitungszentrum, welches mindestens eine erfindungsgemäße Bearbeitungsvorrichtung aufweist.

### Kurze Beschreibung der Zeichnungen

- Fig. 1: zeigt eine Bearbeitungsvorrichtung mit montiertem Zusatzaggregat in einer perspektivischen Ansicht;
- Fig. 2: zeigt eine Bearbeitungsvorrichtung mit montiertem Zusatzbearbeitungsaggregat in einer weiteren perspektivischen Ansicht;
- Fig.3: zeigt ein Trennelement zur Unterbrechung des Leistungsflusses in einer Seitenansicht in einer Bearbeitungseinheit oder in einem Zusatzbearbeitungsaggregat;
- Fig. 4: zeigt ein weiteres Trennelement zur Unterbrechung des Leistungsflusses in einer perspektivischen Ansicht;
- Fig. 5: zeigt das Trennelement aus Fig. 4 in einer Seitenansicht; und
- Fig. 6: zeigt einen Schnitt entlang der Schnittlinien A-A aus Fig. 5 durch das Trennelement.

### Ausführliche Beschreibung bevorzugter Ausführungsformen

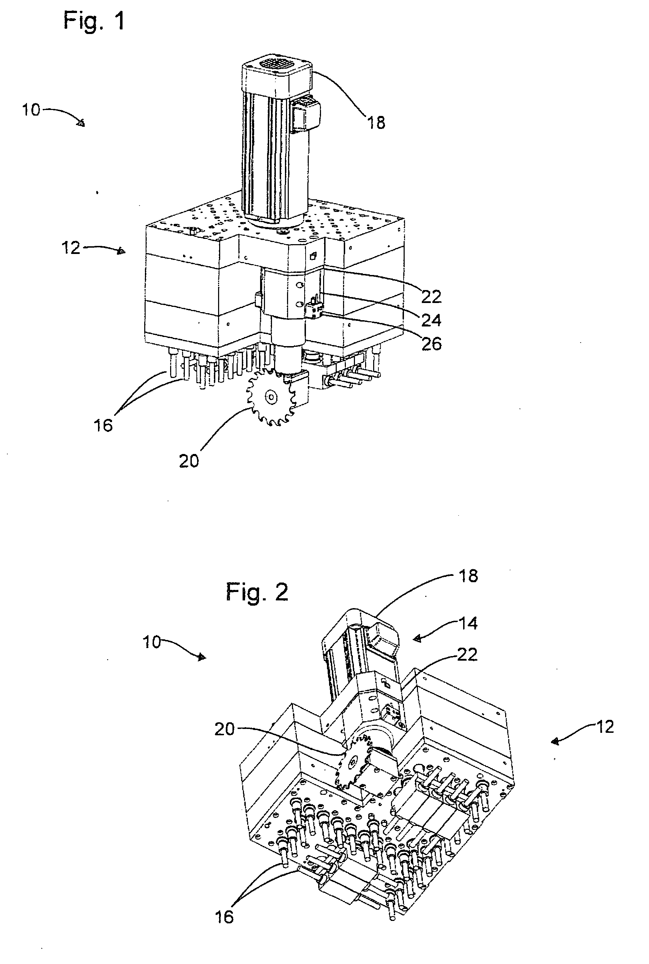

Figur 1 und 2 zeigen eine erfindungsgemäße Bearbeitungsvorrichtung 10, welche eine Bearbeitungseinheit 12 und eine Antriebseinheit 18 aufweist.

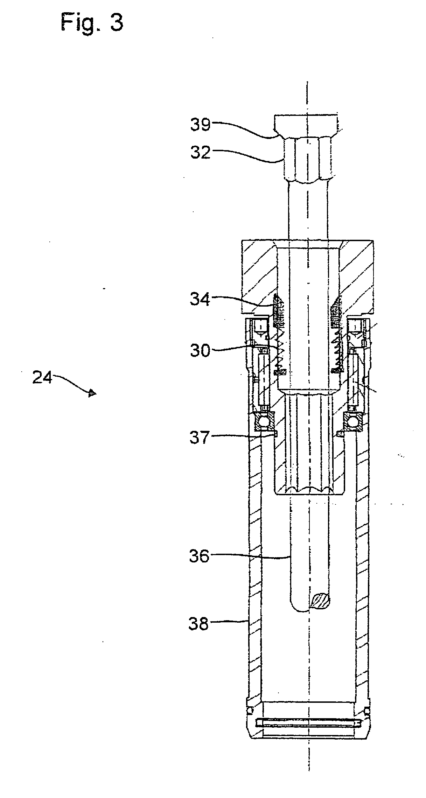

Die Antriebseinheit 18 treibt die Bearbeitungseinheit 12 mechanisch an. Dabei sind in der Bearbeitungseinheit 12 Trennelemente 24 (nicht gezeigt) zur Unterbrechung des Leistungsflusses bzw. Kupplungen vorgesehen, welche in den nachfolgenden Figuren 3 bis 6 näher erläutert werden, welche den Leistungsfluss bzw. die mechanische Energieübertragung zu der Bearbeitungseinheit oder zu den Bearbeitungseinheiten 12 unterbrechen können.

Die Bearbeitungseinheit oder die Bearbeitungseinheiten 12 sind entweder direkt mechanisch mit der Antriebseinheit 18 gekoppelt, oder sie sind indirekt über eine weitere Bearbeitungseinheit 12 mit der Antriebseinheit 18 gekoppelt. Wenn der Leistungsfluss zu einer Bearbeitungseinheit 12 durch das Trennelement unterbrochen wird, so ist dennoch sichergestellt, dass bei in Reihe geschalteten Bearbeitungseinheiten 12, der mechanische Leistungsfluss zu allen gerade benötigten Bearbeitungseinheiten 12 nicht unterbrochen wird. Die Bearbeitungseinheit 12 weist mindestens ein Bearbeitungselement 16, insbesondere eine Bohrspindel 16 auf. Die Bohrspindeln 16 können sowohl horizontal als auch vertikal ausgerichtet sein. Eine winklige Anordnung der Bohrspindeln 16 ist ebenfalls möglich.

Durch Unterbrechen des Leistungsflusses zu einer Bearbeitungseinheit 12 ist es möglich die zu einer Bearbeitungseinheit 12 zugehörigen Bearbeitungselemente 16, insbesondere Bohrspindeln 16, zu- und abzuschalten. Alternativ ist es möglich jede Bohrspindel mit einem eigenen Trennelement zur Unterbrechung des Leistungsflusses zu versehen. Dadurch ist es besonders vorteilhaft möglich, Antriebsenergie zu sparen, da nur die Bohrspindeln 16 mitbewegt werden, die auch aus ihrer Ruhestellung in die Arbeitsstellung verfahren werden und somit eine Bohrtätigkeit ausüben. Ferner ist es so möglich nicht nur Energie zu sparen, sondern auch den Verschleiß der die Bohrspindel antreibenden Einheiten, insbesondere Zahnräder, Wellen, Wälzlager und Dichtungen, gering zu halten.

Über eine an der Bearbeitungseinheit 12 vorgesehene Verbindungsstelle ist es möglich, ein Zusatzbearbeitungsaggregat 14, insbesondere eine Nutsäge oder Säge 20, mit der Bearbeitungsvorrichtung 10 zu kombinieren. Das Zusatzbearbeitungsaggregat 14 steht ebenfalls direkt mit der Antriebseinheit 18 oder mit einer Bearbeitungseinheit 12 im mechanischen Eingriff und wird von dieser angetrieben.

Es ist ferner möglich, das Zusatzbearbeitungsaggregat 14 über ein Trennelement, insbesondere eine Kupplung 24, vom mechanischen Leistungsfluss zu trennen und wieder hinzuzuschalten. Ausführungsbeispiele einer Kupplung werden in den Figuren 3 bis 6 näher erläutert.

Die Kupplung 24 des Zusatzbearbeitungsaggregates 14 wird über den Kupplungsbetätigungsschalter 26 angesteuert. Alternative Ausführungsformen der Kupplung 24 sind eine hydraulische, eine pneumatische, eine elektromechanische oder eine elektromagnetische Ansteuerung der Kupplung 24. Durch Trennen des Leistungsflusses zu dem Zusatzbearbeitungsaggregat 14, insbesondere der Nutsäge oder Säge 20, ist es möglich diese nur dann zuzuschalter, wenn sie auch wirklich gebraucht wird. Dadurch wird eine unnötige Geräuschbildung vermieden, Antriebenergie eingespart und die Verletzungsgefahr durch ein sich ständig drehendes Schnittwerkzeug, insbesondere eine Säge 20, reduziert.

Die Figuren 3 bis 6 zeigen jeweils beispielhaft eine Kupplung, wie sie zwischen zwei Bearbeitungseinheiten 12 innerhalb eines Bohrspindelaggregats 16 der wie sie zu einem Zusatzbearbeitungsaggregat 14 ausgeführt sein kann.

Dabei zeigt Figur 3 eine Kupplung 24, welche einen Antriebssechskant 32 und eine Bohrspindelhalterung 38 aufweist. Beim Einkuppelvorgang wird der sich drehende Antriebssechskant 32 in Richtung der Bohrspindelhalterung 38 gesenkt. Dabei legt sich der Kegel 39, welcher an der Welle des Antriebssechskants 32 ausgebildet ist, gegen einen gefederten Ring 34, welcher über eine Feder 30 mit der Bohrspindel verbunden ist. Anschließend wird die Bohrspindel 36 beschleunigt bis sie die Geschwindigkeit des Antriebssechskants 32 erreicht hat.

Wird der Antriebssechskant 32 weiter in die Bohrspindelhalterung 38 abgesenkt, so taucht der Antriebssechskant 32 in das Zahnrad 37 ein und es entsteht eine formschlüssige Verbindung zwischen dem Antriebssechskant 32 und dem Zahnrad 37.

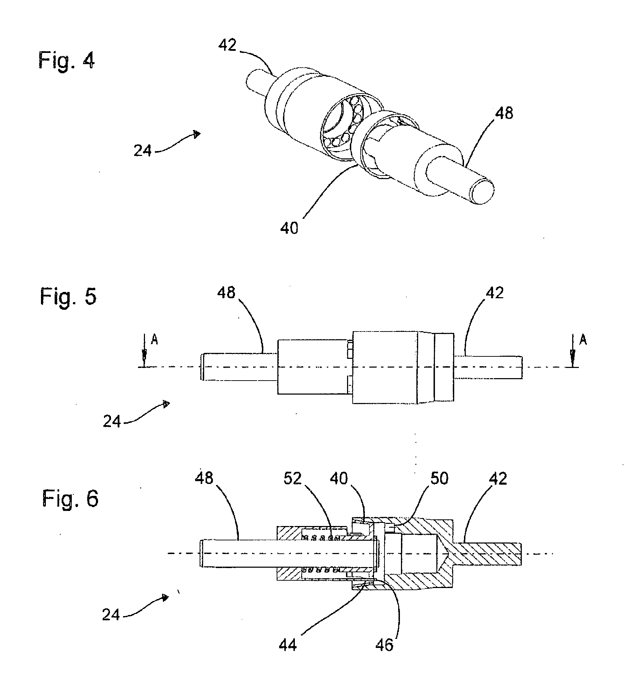

Die Figuren 4 bis 6 zeigen beispielhaft eine Kupplung, bei welcher eine Antriebswelle 48 und eine Abtriebswelle 42 gekuppelt werden.

Der kegelförmige Synchronring 40 ist dabei axial beweglich mit der Antriebswelle 48 verbunden und wird im ausgekuppelten Zustand über eine Spiralfeder 52 von der Antriebswelle 48 axial beabstandet. Im ausgekuppelten Zustand besteht keine kraftschlüssige Verbindung zwischen Antriebswelle 48 und Abtriebswelle 42. Beim Einkuppeln werden die Antriebswelle 48 und die Abtriebswelle 42 zusammengedrückt, so dass sich zunächst die äußere Kegelfläche des Synchronrings 40 an eine innere zylindrische Fläche der Abtriebswelle 42 drückt. Dadurch beginnt sich die Abtriebswelle 42 langsam zu drehen. Werden die Antriebswelle 48 und die Abtriebswelle 42 weiter zusammengedrückt, so bewegen sich die Mitnehmerklauen 44 der Kegelfläche des Synchronrings 40 in Richtung der Abtriebswelle 42.

Die Mitnehmerklauenspitze 46 der Mitnehmerklaue 44 ragt dabei in eine Öffnung des Synchronrings 40. Die schrägen Spitzen der Mitnehmerklauenspitze 46 verhindern eine weitere axiale Verschiebung durch die Öffnung des Synchronrings 40 in Richtung der Abtriebswelle 42 solange die Abtriebswelle 42 und die Antriebswelle 48 unterschiedliche Drehzahlen aufweisen. Sobald die Abtriebswelle 42 und die Antriebswelle 48 nahezu synchron drehen, d.h. die Beschleunigung der Abtriebswelle 42 abgeschlossen ist, können die Mitnehmerklauenspitzen 46 weiter durch die Öffnung des Synchronrings 40 in Richtung der Abtriebswelle 42 geführt werden und dort in axiale Bohrungen 50 der Abtriebswelle eintauchen und so eine formschlüssige Verbindung zwischen Antriebswelle 48 und Abtriebswelle 42 herstellen.

Dies sind zwei Ausführungsbeispiele wie die Kupplung 24 in einer Bearbeitungsvorrichtung 10 ausgeführt werden kann. Der Fachmann auf dem Stand der Technik ist in der Lage alternative Kupplungsvorrichtungen zur Verfügung zu stellen, insbesondere eine elektromechanische oder eine elektromagnetische Kupplung.

## Patentansprüche

1. Bearbeitungsvorrichtung (10) für die Bearbeitung von plattenförmigen Werkstücken, umfassend:
mindestens eine Bearbeitungseinheit (12);
eine Antriebseinheit (18) zur Übertragung einer mechanischen Leistung auf die Bearbeitungseinheit (12);
wobei mindestens ein Trennelement (24) zur Unterbrechung des Leistungsflusses zwischen der Antriebseinheit (18) und mindestens einer Bearbeitungseinheit (12) ausgebildet ist,
**dadurch gekennzeichnet, dass**
das Trennelement (24) als formschlüssige Kupplung (24) ausgeführt ist,
wobei die Kupplung (24) einen Synchronring (40) aufweist, der beim Kupplungsvorgang so lange kein vollständiges Einkuppeln ermöglicht bis beide Kupplungshälften annähernd gleiche Drehzahl aufweisen.

2. Bearbeitungsvorrichtung nach Anspruch 1, **dadurch gekennzeichnet, dass** mindestens ein mit dem Bearbeitungseinheit (12) verbindbares Zusatzbearbeitungsaggregat (14) vorgesehen ist, welches ein Trennelement zur Unterbrechung des Leistungsflusses zu mindestens einem Zusatzbearbeitungsaggregat (14) aufweist.

3. Bearbeitungsvorrichtung nach Anspruch 1 oder 2, **dadurch gekennzeichnet, dass** die Kupplung (24) so ausgebildet ist, dass ein Einkuppeln oder ein Auskuppeln bei sich drehender oder bei stehender Antriebseinheit und bei drehender oder stehender Bearbeitungseinheit (12) möglich ist.

4. Bearbeitungsvorrichtung nach einem der vorhergehenden Ansprüche, **dadurch gekennzeichnet, dass** die Bearbeitungseinheiten (12) zu Bearbeitungsaggregaten zusammenfassbar sind.

5. Bearbeitungsvorrichtung nach einem der vorhergehenden Ansprüche, **dadurch gekennzeichnet, dass** die Bearbeitungsaggregate unterschiedlich anordbar sind.

6. Bearbeitungsvorrichtung nach einem der vorhergehenden Ansprüche, **dadurch gekennzeichnet, dass** die Bearbeitungseinheiten (12) als Spindelaggregate, insbesondere als Bohrspindelaggregate (16), ausgebildet sind.

7. Bearbeitungsvorrichtung nach einem der vorhergehenden Ansprüche 2 bis 6, **dadurch gekennzeichnet, dass** das Zusatzbearbeitungsaggregat (14) schnelllösbar von dem Bearbeitungsaggregat ausgeführt ist.

8. Bearbeitungsvorrichtung nach einem der vorhergehenden Ansprüche 2 bis 7, **dadurch gekennzeichnet, dass** das Zusatzbearbeitungsaggregat (14) über mehrere Verbindungsstellen (22) mit dem Bearbeitungsaggregat verbindbar ausgeführt ist.

9. Bearbeitungsvorrichtung nach einem der vorhergehenden Ansprüche 2 bis 8, **dadurch gekennzeichnet, dass** das Zusatzbearbeitungsaggregat (14) als Säge (20), insbesondere als Nutsäge, ausgebildet ist.

10. Bearbeitungsvorrichtung nach einem der vorhergehenden Ansprüche 2 bis 8, **dadurch gekennzeichnet, dass** das Zusatzbearbeitungsaggregat (14) als vertikales Spindelaggregat (16) und/oder als horizontales Spindelaggregat (16) ausgebildet ist.

11. Bearbeitungsvorrichtung nach einem der vorhergehenden Ansprüche 2 bis 8, **dadurch gekennzeichnet, dass** das Zusatzbearbeitungsaggregat (14) als Frässpindel ausgebildet ist.

12. Bearbeitungszentrum mit zumindest einer Bearbeitungsvorrichtung (10) nach einem der vorhergehenden Ansprüche.

## Claims

1. Machining device (10) for machining panel-like workpieces comprising:
at least one machining unit (12);
a drive unit (18) to transfer a mechanical power to the machining unit (12);
wherein at least one separating element (24) is formed to interrupt the power flow between the drive unit (18) and at least one machining unit (12),
**characterised in that** the separating element (24) is designed as a positive coupling (24),
wherein the coupling (24) has a synchronising ring (40) which, during the coupling process, makes complete coupling impossible until both coupling halves have approximately the same speed.

2. Machining device according to claim 1, **characterised in that** at least one additional machining aggregate (14), which can be connected to the machining unit (12), is provided which has a separating element to interrupt the power flow to at least one additional machining aggregate (14).

3. Machining device according to claim 1 or 2, **characterised in that** the coupling (24) is designed so that coupling or uncoupling is possible for rotating or stationary drive unit and for rotating or stationary machining unit (12).

4. Machining device according to one of the preceding claims, **characterised in that** the machining units (12) can be combined to form machining aggregates.

5. Machining device according to one of the preceding claims, **characterised in that** the machining aggregates can be arranged differently.

6. Machining device according to one of the preceding claims, **characterised in that** the machining units (12) are designed as spindle aggregates, in particular as boring spindle aggregates (16).

7. Machining device according to one of the preceding claims 2 to 6, **characterised in that** the additional machining aggregate (14) is designed to be released quickly from the machining aggregate.

8. Machining device according to one of the preceding claims 2 to 7, **characterised in that** the additional machining aggregate (14) is designed to be connectable to the machining aggregate via several connecting points (22).

9. Machining device according to one of the preceding claims 2 to 8, **characterised in that** the additional machining aggregate (14) is designed as a saw (20), in particular as a grooving saw.

10. Machining device according to one of the preceding claims 2 to 8, **characterised in that** the additional machining aggregate (14) is designed as a vertical spindle aggregate (16) and/or as a horizontal spindle aggregate (16).

11. Machining device according to one of the preceding claims 2 to 8, **characterised in that** the additional machining aggregate (14) is designed as a milling spindle.

12. Machining centre having at least one machining device (10) according to one of the preceding claims.

## Revendications

1. Dispositif d'usinage (10) pour l'usinage de pièces en forme de plaques, comprenant :
- au moins une unité d'usinage (12) ;
- une unité motrice (18) pour la transmission d'une puissance mécanique à l'unité d'usinage (12) ;
- au moins un élément de coupure (24) étant prévu pour interrompre le flux de puissance entre l'unité motrice (18) et au moins une unité d'usinage (12) ;
**caractérisé en ce que** l'élément de coupure (24) est réalisé comme un embrayage par concordance de forme (24) ,
l'embrayage (24) comportant un anneau de synchronisation (40) qui, lors du processus d'embrayage, interdit un embrayage complet tant que les deux éléments à coupler n'ont pas approximativement la même vitesse de rotation.

2. Dispositif d'usinage selon la revendication 1, **caractérisé en ce qu'**il est prévu au moins un agrégat d'usinage additionnel (14) qui peut être assemblé à l'unité d'usinage (12) et qui comporte un élément de coupure pour interrompre le flux de puissance vers au moins un agrégat d'usinage additionnel (14).

3. Dispositif d'usinage selon la revendication 1 ou 2, **caractérisé en ce que** l'embrayage (24) est conçu de telle sorte qu'un embrayage ou un débrayage est possible aussi bien lorsque l'unité motrice tourne ou lorsqu'elle est arrêtée et aussi bien lorsque l'unité d'usinage (12) tourne ou lorsqu'elle est arrêtée.

4. Dispositif d'usinage selon l'une des revendications précédentes, **caractérisé en ce que** les unités d'usinage (12) peuvent être réunies en agrégats d'usinage.

5. Dispositif d'usinage selon l'une des revendications précédentes, **caractérisé en ce que** les agrégats d'usinage peuvent être agencés de différentes manières.

6. Dispositif d'usinage selon l'une des revendications précédentes, **caractérisé en ce que** les unités d'usinage (12) sont conçues comme des agrégats de broches, notamment comme des agrégats de broches de perçage (16).

7. Dispositif d'usinage selon l'une des revendications précédentes 2 à 6, **caractérisé en ce que** l'agrégat d'usinage additionnel (14) est réalisé de manière à pouvoir être rapidement enlevé de l'agrégat d'usinage.

8. Dispositif d'usinage selon l'une des revendications précédentes 2 à 7, **caractérisé en ce que** l'agrégat d'usinage additionnel (14) est réalisé de manière à pouvoir être assemblé à l'agrégat d'usinage par l'intermédiaire de plusieurs points d'assemblage (22).

9. Dispositif d'usinage selon l'une des revendications précédentes 2 à 8, **caractérisé en ce que** l'agrégat d'usinage additionnel (14) est conçu comme une scie (20), notamment comme une scie à rainurer.

10. Dispositif d'usinage selon l'une des revendications précédentes 2 à 8, **caractérisé en ce que** l'agrégat d'usinage additionnel (14) est conçu comme un agrégat de broches vertical (16) et/ou comme un agrégat de broches horizontal (16).

11. Dispositif d'usinage selon l'une des revendications précédentes 2 à 8, **caractérisé en ce que** l'agrégat d'usinage additionnel (14) est conçu comme une broche de fraisage.

12. Machine d'usinage avec au moins un dispositif d'usinage (10) selon l'une des revendications précédentes.
